# EUROPEAN PATENT SPECIFICATION

(11) **EP 4 532 885 B1**
(45) Date of publication and mention of the grant of the patent: **21.10.2026**
(21) Application number: 23732305.0
(22) Date of filing: 25.05.2023
(51) Int. Cl.: E21B 7/14, B23K 26/144, B23K 26/382, E21B 43/11

(54) **FORMING PERFORATION TUNNELS IN A SUBTERRANEAN FORMATION**
ERZEUGUNG DER PERFORATIONSTUNNELN IN UNTERIRDISCHEN GESTEINEN
FORMATION DE TUNNELS DE PERFORATION DANS UNE FORMATION SOUTERRAINE

(30) Priority: 02.06.2022 US 202217830608
(43) Date of publication of application: 09.04.2025
(73) Proprietor: Saudi Arabian Oil Company, Dhahran 31311 (SA)
(72) Inventor: BATARSEH, Sameeh Issa, Dhahran 31311 (SA)
(74) Representative: Fish & Richardson P.C.
(86) International application number: PCT/US2023/023488
(87) International publication number: WO 2023/235209

(56) References cited:
- EP-A1- 2 772 332
- WO-A1-2012/031009
- US-A- 4 227 582
- US-A1- 2022 112 772

## Description

### TECHNICAL FIELD

The present disclosure describes apparatus, systems, and methods for forming perforation tunnels in a subterranean formation and, more particularly, forming perforation tunnels in a subterranean formation with a downhole laser.

### BACKGROUND

Downhole laser tools are sometimes used as an alternative to conventional shaped charge perforation guns for generating perforation tunnels in a subterranean formation that holds hydrocarbon reserves. Downhole laser tools, as opposed to conventional perforating tools, can have greater precision, reliability, control, and cost. Downhole laser tools, in some instances, can penetrate all types of rock formations regardless of the hardness and stress orientation of the rock. Further, downhole laser tools have advantages including the ability to drill and penetrate in types of rock, drill different hole sizes, precise in orienting the laser beam to create a hole, and it is stress and structure independent.

US 2022/0112772 describes a drilling tool for drilling in a formation. This drilling tool may include an optical fiber having a laser input end and a laser output end and a laser source optically connected to the laser input end. Further, the drilling tool may include an activating agent conduit having an activating agent inlet and an activating agent outlet and an activating agent source connected to the activating agent inlet that supplies an activating agent. Finally, the drilling tool may include a drill head.

WO 2012/031009 describes high power laser systems, apparatus and methods for performing laser operations in particular in environments where an optically obstructive medium may be present in the laser beam path, such as within the borehole of an oil, gas or geothermal well, or below the surface of a body of water.

### SUMMARY

Claim 1 relates to a downhole tool that includes a housing configured to couple to a downhole conveyance that is extendable from a terranean surface, through a wellbore, and to a subterranean formation; a laser tool positioned in the housing and configured to transmit a laser beam sufficient to form a tunnel in the subterranean formation; a plurality of shaped members, each of the plurality of shaped members including at least two laser reflective surfaces; a chamber positioned in the housing and configured to enclose the plurality of shaped members; and a perforating head coupled to the housing. The perforating head includes an optical pathway formed to receive the laser beam from the laser tool and output the laser beam toward the subterranean formation through an outlet of the perforating head; and at least one conduit separate from the optical pathway and configured to receive at least a portion of the plurality of shaped members from the chamber and output the portion of the plurality of shaped members through the outlet of the perforating head.

In an aspect combinable with the example implementation, the plurality of shaped members includes a plurality of polyhedrons, each of the plurality of polyhedrons including the at least two laser reflective surfaces.

In another aspect combinable with any of the previous aspects, the plurality of polyhedrons includes a first portion of first polyhedrons having a first number of laser reflective surfaces and a second portion of second polyhedrons having a second number of laser reflective surfaces different than the first number.

In another aspect combinable with any of the previous aspects, each of the plurality of polyhedrons includes a number of reflective surfaces equal to a number of faces of the polyhedron.

In another aspect combinable with any of the previous aspects, each of the reflective surfaces includes a unique angle of incidence and a unique angle of reflection relative to the other reflective surfaces.

In another aspect combinable with any of the previous aspects, at least one of the plurality of polyhedrons includes a tetrahedron, a cube, a decahedron, an octahedron, a dodecahedron, or an icosahedron.

In another aspect combinable with any of the previous aspects, each of the at least two laser reflective surfaces includes a mirrored or coated surface.

In another aspect combinable with any of the previous aspects, the laser tool is configured to couple to a laser generator through a fiber optic cable.

In another aspect combinable with any of the previous aspects, the laser generator is configured to generate the laser beam and transmit the generated laser beam to the laser tool through the fiber optic cable.

In another aspect combinable with any of the previous aspects, the perforating head further includes at least one focus lens positioned in the optical pathway and configured to shape the laser beam toward the outlet; and a cover lens positioned between the at least one focus lens and the outlet and configured to protect the at least one focus lens.

In another aspect combinable with any of the previous aspects, at least one of the plurality of shaped members is hollow.

Claim 9 relates to a method for laser perforating a subterranean formation includes running a downhole tool on a downhole conveyance into a wellbore formed from a terranean surface into a subterranean formation. The downhole tool includes a housing coupled to downhole conveyance, a laser tool positioned in the housing, a chamber positioned in the housing that encloses a plurality of shaped members, each of the plurality of shaped members including at least two laser reflective surfaces, and a perforating head coupled to the housing. The method further includes operating the laser tool to transmit a laser beam through an optical pathway formed in the perforating head and through an outlet of the perforating head to form a tunnel in the subterranean formation; subsequent to forming the tunnel in the subterranean formation with the laser beam, releasing at least a portion of the plurality of shaped members from the chamber, through the outlet of the perforating head, and into the tunnel in the subterranean formation; subsequent to releasing the portion of the plurality of shaped members into the tunnel, operating the laser tool to generate another laser beam to reflect off at least some of the laser reflective surfaces of the portion of the plurality of shaped members; and forming at least one sub-tunnel into the subterranean formation from the tunnel with the another laser beam reflected off at least some of the laser reflective surfaces of the portion of the plurality of shaped members.

In an aspect combinable with the example implementation, the plurality of shaped members includes a plurality of polyhedrons, each of the plurality of polyhedrons including the at least two laser reflective surfaces.

Another aspect combinable with any of the previous aspects further includes forming a plurality of sub-tunnels into the subterranean formation from the tunnel with the another laser beam reflected off the at least two laser reflective surfaces of the plurality of polyhedrons.

In another aspect combinable with any of the previous aspects, the plurality of polyhedrons includes a first portion of first polyhedrons having a first number of laser reflective surfaces and a second portion of second polyhedrons having a second number of laser reflective surfaces different than the first number.

In another aspect combinable with any of the previous aspects, each of the plurality of polyhedrons includes a number of reflective surfaces equal to a number of faces of the polyhedron.

In another aspect combinable with any of the previous aspects, each of the reflective surfaces includes a unique angle of incidence and a unique angle of reflection relative to the other reflective surfaces.

In another aspect combinable with any of the previous aspects, at least one of the plurality of polyhedrons includes a tetrahedron, a cube, an octahedron, a dodecahedron, or an icosahedron.

In another aspect combinable with any of the previous aspects, forming the at least one sub-tunnel into the subterranean formation from the tunnel with the another laser beam reflected off at least some of the laser reflective surfaces of the portion of the plurality of shaped members includes forming the at least one sub-tunnel into the subterranean formation from the tunnel with the another laser beam reflected off a mirrored or coated surface of at least some of the laser reflective surfaces of the portion of the plurality of shaped members.

Another aspect combinable with any of the previous aspects further includes generating the laser beam with a laser generator; and transmitting the generated laser beam from the laser generator to the laser tool through a fiber optic cable.

In another aspect combinable with any of the previous aspects, the tunnel is formed substantially orthogonal to a length of the wellbore, and the at least one sub-tunnel is angularly formed from the tunnel into the subterranean formation.

In another aspect combinable with any of the previous aspects, the tunnel is formed substantially orthogonal to a length of the wellbore.

In another aspect combinable with any of the previous aspects, the plurality of sub-tunnels are angularly formed from the tunnel into the subterranean formation, at least one of the plurality of sub-tunnels angularly formed from the tunnel at a first angle, and at least another of the plurality of sub-tunnels angularly formed from the tunnel at a second angle different than the first angle.

Another aspect combinable with any of the previous aspects further includes producing a fluid into the at least one sub-tunnel, and into the wellbore from the at least one sub-tunnel through the tunnel, from the subterranean formation.

In another aspect combinable with any of the previous aspects, the fluid includes a hydrocarbon fluid.

Implementations of systems and methods for forming perforation tunnels with a downhole laser tool according to the present disclosure may include one or more of the following features. For example, example implementations according to the present disclosure can create a network of perforation tunnels through application of a laser beam to improve fluid flow from a hydrocarbon bearing formation into a wellbore for production through the use of shaped members. As another example, example implementations according to the present disclosure can create multiple laser perforated tunnels from a single application of a laser beam into a subterranean formation with reflected laser beams to improve production from a wellbore. As another example, example implementations according to the present disclosure can create multi-directional laser perforated sub-tunnels from a single laser perforation tunnel in a subterranean formation.

The details of one or more implementations of the subject matter described in this disclosure are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a schematic diagram of an example implementation of a wellbore system that includes a downhole tool for laser perforating a subterranean formation according to the present disclosure.
FIG. 2 is a schematic diagram of another example implementation of a wellbore system that includes a downhole tool for laser perforating a subterranean formation according to the present disclosure.
FIG. 3 is a schematic diagram of another example implementation of a downhole tool for laser perforating a subterranean formation according to the present disclosure.
FIG. 4 includes schematic illustrations of example implementations of shaped members used in a downhole tool for laser perforating a subterranean formation according to the present disclosure.
FIG. 5 includes schematic illustrations of an example implementation of a shaped member receiving and reflecting a laser beam from a downhole tool for laser perforating a subterranean formation according to the present disclosure.
FIG. 6 is a schematic diagram of a perforating head of a downhole tool for laser perforating a subterranean formation according to the present disclosure.
FIG. 7 includes schematic illustrations of a laser perforation operation with a downhole tool for laser perforating a subterranean formation according to the present disclosure.
FIG. 8 is a graph showing rate of penetration of a laser beam for different rock types according to the present disclosure.
FIGS. 9A-9B show photographs and CT scans of a rock sample that has been laser perforated.
FIGS. 10A-10B show photographs and CT scans of rock samples that have been laser perforated.

### DETAILED DESCRIPTION

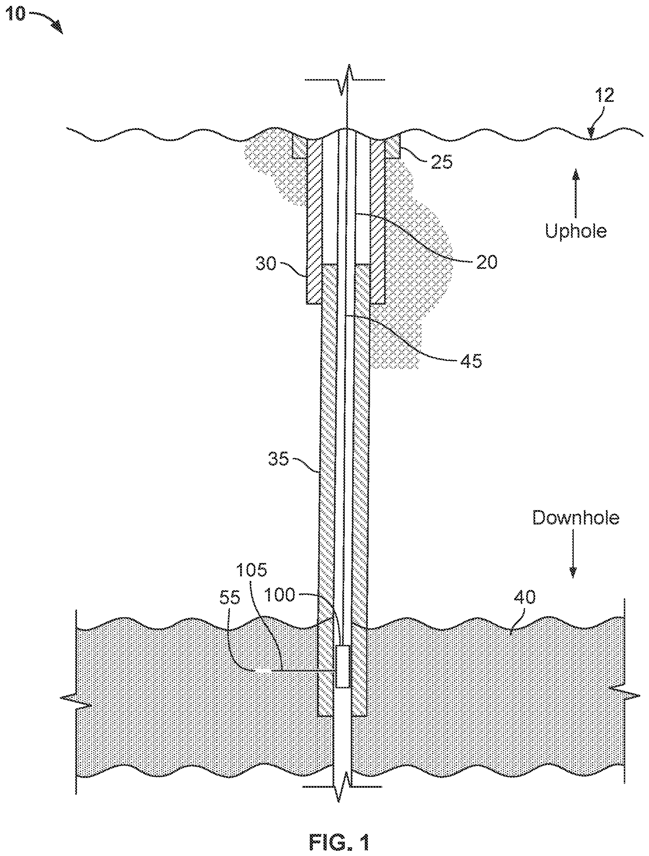

FIG. 1 is a schematic diagram of wellbore system 10 that includes a downhole tool 100 for laser perforating a subterranean formation (in other words, a rock formation) from a wellbore according to the present disclosure. Generally, FIG. 1 illustrates a portion of one embodiment of a wellbore system 10 according to the present disclosure in which the downhole tool 100 can be run into a wellbore 20 and activated to laser perforate a formation to form one or multiple tunnels 55 with a laser beam 105, as well as form one or more sub-tunnels from the tunnel 55 with laser beams reflected from one or more shaped members inserted into the tunnel 55 by the downhole tool 100 as described in more detail herein. In this example, the downhole tool 100 is connected to a downhole conveyance 45 during run in and run out operations in the wellbore 20. The downhole conveyance 45 can be, for example, a wireline or slickline, or other conductor. In alternative examples, the downhole conveyance 45 can be a tubing string (for example, drill string comprised of drill pipe sections, tubing work string or coiled tubing). In some aspects, the downhole conveyance 45 can include two or more conveyances, such as a conveyance for running in and running out operations, as well as a conveyance (such as a fiber optic cable) that supplies a generated laser beam to the downhole tool 100 (that is subsequently transmitted as the laser beam 105).

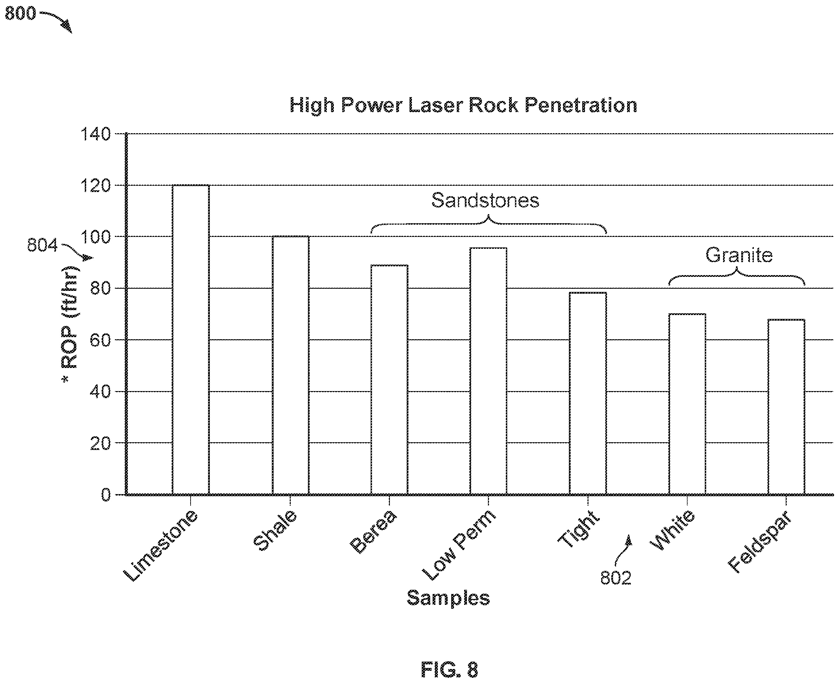

According to the present disclosure, the downhole tool 100 can be run into the wellbore 20 in order to laser perforate the tunnel(s) 55, as well as sub-tunnels, in the subterranean formation 40 for fluid production, such as hydrocarbon fluid production from the wellbore 20. Perforated tunnels and a size (for example, diameter and length) of the tunnel(s) 55 can be controlled by the beam size of laser beam 105. For example, relatively smaller beam size creates smaller tunnel(s) 55, while relatively larger beam size creates larger tunnel(s) 55. In some aspects, the laser beam 105 can create the tunnel(s) 55 regardless of rock type (or in most rock types in which hydrocarbon fluids can be recovered). Turning briefly to FIG. 8, this figure shows a graph 800 of rate of penetration of a laser beam relative to rock type. In graph 800, x-axis 802 represents rock type, with limestone, shale, different sandstones, and different granites shown. In graph 800, y-axis 804 represents rate of penetration of the laser beam in feet per hour (ft./hr.), where one foot is approximately 30 cm. As shown, laser beam technology can create tunnels in rock formations from about 21 m/hr. (70 ft./hr.) to 37 m/hr. (120 ft./hr.) depending on rock type.

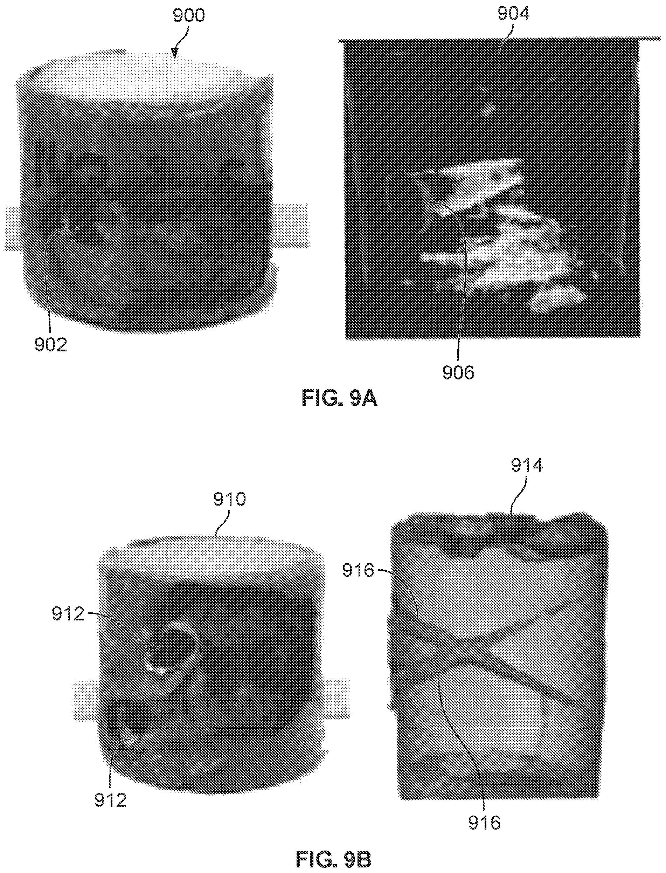

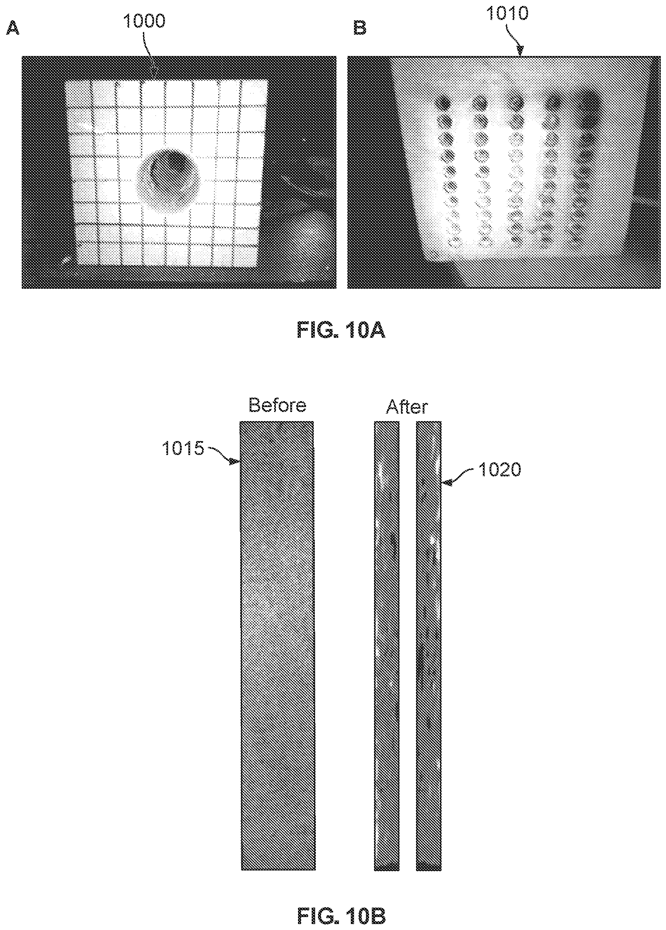

Further experiments with laser technology show that tunnels can be formed in different rock types. For example, turning to FIG. 9A, this figure shows an image 900 of a rock sample in which a laser perforation tunnel 902 has been formed. A CT scan 904 of the same rock sample shows the scanned tunnel 906 that penetrates the sample. Turning to FIG. 9B, this figure shows an image 910 of a rock sample in which two laser perforation tunnels 912 have been formed. A CT scan 914 of the same rock sample shows the scanned tunnels 912 that penetrate the sample. As further shown in FIG. 10A, this figure shows an image 1000 of a relatively large laser perforation tunnel formed in a sandstone block.FIG. 10A also shows, in contrast, an image 1010 of multiple, smaller laser perforation tunnels formed in a sandstone block with precision. Turning to FIG. 10B, this figure shows an image 1015 of a rock sample prior to laser perforating, while a CT image 1020 shows the rock sample after laser perforating. As shown in these examples, laser technology has sufficient precision to control of the laser to form tunnels of certain sizes and directions and orientations relative to a rock formation.

Turning back to FIG. 1, the wellbore system 10 accesses the subterranean formation 40 (and other formations) and provides access to hydrocarbons located in such subterranean formation 40. In an example implementation of system 10, the system 10 may be used for a production operation in which the hydrocarbons may be produced from the subterranean formation 40 within a wellbore tubular (for example, through the production casing 35 or other production tubular) subsequent to the laser perforating (and possibly other completion operations).

A drilling assembly (not shown) may be used to form the wellbore 20 extending from the terranean surface 12 and through one or more geological formations in the Earth. One or more subterranean formations, such as subterranean formation 40, are located under the terranean surface 12. One or more wellbore casings, such as a surface casing 30 and production casing 35, may be installed in at least a portion of the wellbore 20. In some embodiments, a drilling assembly used to form the wellbore 20 may be deployed on a body of water rather than the terranean surface 12. For instance, in some embodiments, the terranean surface 12 may be an ocean, gulf, sea, or any other body of water under which hydrocarbon-bearing formations may be found. In short, reference to the terranean surface 12 includes both land and water surfaces and contemplates forming and developing one or more wellbore systems 10 from either or both locations.

In some embodiments of the wellbore system 10, the wellbore 20 may be cased with one or more casings. As illustrated, the wellbore 20 includes a conductor casing 25, which extends from the terranean surface 12 shortly into the Earth. A portion of the wellbore 20 enclosed by the conductor casing 25 may be a large diameter borehole. Additionally, in some embodiments, the wellbore 20 may be offset from vertical (for example, a slant wellbore). Even further, in some embodiments, the wellbore 20 may be a stepped wellbore, such that a portion is drilled vertically downward and then curved to a substantially horizontal wellbore portion. Additional substantially vertical and horizontal wellbore portions may be added according to, for example, the type of terranean surface 12, the depth of one or more target subterranean formations, the depth of one or more productive subterranean formations, or other criteria.

Downhole of the conductor casing 25 may be the surface casing 30. The surface casing 30 may enclose a slightly smaller borehole and protect the wellbore 20 from intrusion of, for example, freshwater aquifers located near the terranean surface 12. The wellbore 20 may than extend vertically downward. This portion of the wellbore 20 may be enclosed by the production casing 35. Any of the illustrated casings, as well as other casings or tubulars that may be present in the wellbore system 10, may include wellbore liners.

Downhole tool 100 includes a laser tool used for creating fluid flow paths through hydrocarbon-bearing rock formations. The laser tool may operate downhole to create a fluid flow path (for example, tunnel 55 and sub-tunnels) through a wellbore casing (for example, casing 35) and the rock formation (for example, subterranean formation 40). The fluid flow path is created by controlling the laser tool to direct a laser beam to rock in the rock formation. In this example, the laser beam has an energy density that is great enough to cause at least some of the rock in the rock formation to sublimate. Sublimation includes changing from a solid phase directly into a gaseous phase without first changing into a liquid phase. In the case of rock, sublimation occurs when the temperature of the rock, which is increased by the laser beam, exceeds a threshold. That threshold is known as the sublimation point and may be different for different types of rock. In this example, the sublimation of the rock creates tunnels or cracks through the rock formation. Fluids may be introduced into those tunnels or cracks to fracture the rock formation and thereby promote the flow of production fluid, such as oil, from the rock formation into the wellbore.

The example downhole tool 100 can also include one or more sensors to monitor environmental conditions in the wellbore 20 and to output signals indicative of the environmental conditions. Examples of the sensors may include temperature sensors to measure temperature downhole, pressure sensors to measure pressure downhole, and acoustic sensors to measure noise levels downhole. Other sensors may also be used as described in this specification. Signals received from the sensors may indicate that there are problems inside the wellbore 20 or that there are problems with the laser tool of the downhole tool 100. A drilling engineer may take corrective action based on these signals. For example, if a temperature or pressure downhole is such that drilling equipment, such as the laser tool, may be damaged, that equipment may be withdrawn from the wellbore.

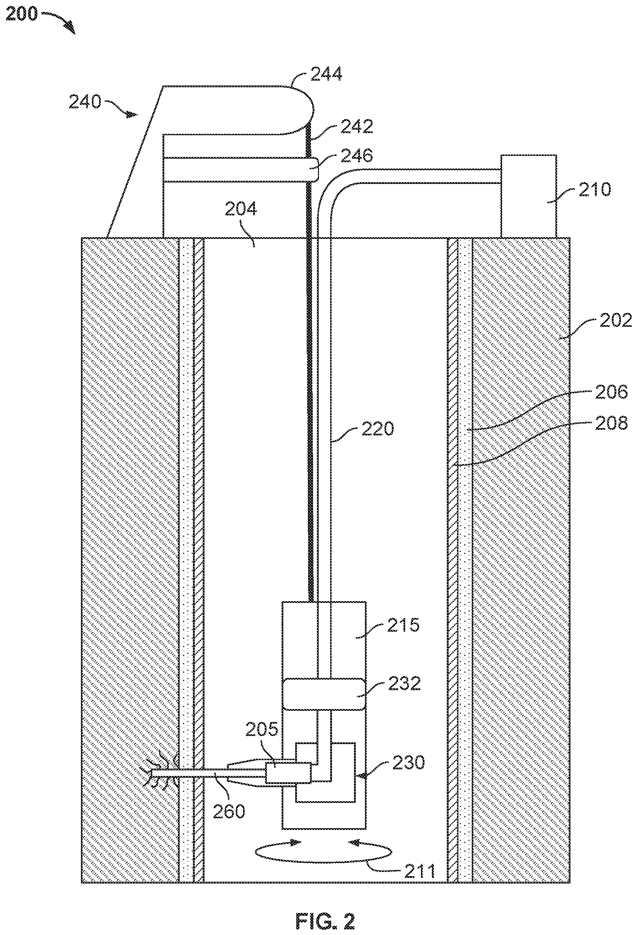

FIG. 2 shows components of a system 200 that includes an implementation of a laser tool 230 (in other words, a downhole tool that includes a laser tool) according to the present disclosure. At least part of system 200 is disposed within wellbore 204. Wellbore 204 passes through a hydrocarbon-bearing rock formation 202 ("rock formation 202"). Rock formation 202 may include various materials, such as limestone, shale, or sandstone. Each of these materials has a different sublimation point. The sublimation point may be affected by properties of the material, such as the density of the material and the porosity of the material. A casing 208 is cemented 206 in place to reinforce the wellbore against rock formation 202. A string 215 that houses the laser tool 230 is run downhole through casing 208.

Laser tool 230 is configured to output a laser beam 160. In this example, the laser tool is also configured to rotate about an axis in the wellbore 204, such as a central axis of the wellbore 204. In some implementations, the laser tool 230 is mounted on an axle (not shown) for rotation. A motor 232 can be included in string 215 to implement the rotation of laser tool 230 about the axle. In some implementations, the entire string 215 is connected to a drive arrangement 246 that is configured to rotate string 215 and thus laser tool 230. Rotation of the laser tool 230 is identified by circular arrow 211. During rotation, laser beam 160 may sweep the entire circumference of the wellbore. That is, the laser tool may rotate a full 360.degree. In some cases, the laser tool may rotate less than 360.degree.

Laser tool 230 is configured to direct laser beam 160 parallel to a surface containing the wellhead or at an angle that is not parallel to the surface. Laser tool 230 includes a chamber that holds on or more (and typically, many) shaped members that can be disposed in a laser perforated tunnel to subsequently create sub-tunnels into the rock formation 202 from the tunnel. Such sub-tunnels can be created, as described more fully herein, by the reflection of a generated laser beam 260 from reflective surfaces of the shaped members that are positioned in a previously-formed perforation tunnel.

System 200 includes a laser generating unit, such as laser generator 210. Laser generator 210 is configured to generate a laser beam and to output the laser beam to the laser tool 230. In some implementations, laser generator 210 is at the surface near to the wellhead. In some implementations, laser generator 210 is downhole, in whole or in part. The laser beam output by laser generator 210 is referred to as a raw laser beam because it has not been manipulated by laser tool 230. Examples of laser generator 210 include ytterbium lasers, erbium lasers, neodymium lasers, dysprosium lasers, praseodymium lasers, and thulium lasers. In an example implementation, laser generator 210 is a 5.34 kilowatt (kW) ytterbium-doped, multi-clad fiber laser.

In some implementations, laser generator 210 can be configured to output laser beams having different energy densities. Laser beams having different energy densities may be useful for rock formations that are composed of different materials having different sublimation points. For example, laser beams having different energy densities may be used to sublimate different types of rocks in a rock formation. In some implementations, the operation of laser generator 210 is programmable. For example, laser generator 210 may be programmed to vary the optical properties of the laser beam or the energy density of the laser beam.

In some implementations, the laser beam output by laser generator10 has an energy density that is sufficient to heat at least some rock to its sublimation point. In this regard, the energy density of a laser beams a function of the average power output of the laser generator during laser beam output. In some implementations, the average power output of laser generator 210 is in one or more of the following ranges: between 500 Watts (W) and 1000 W, between 1000 W and 1500 W, between 1500 W and 2000W, between 2000 W and 2500 W, between 2500 W and 3000 W, between 3000 Wand 3500 W, between 3500 W and 4000 W, between 4000 W and 4500 W, between4500 W and 5000 W, between 5000 W and 5500 W, between 5500 W and 6000 W, between 6000 W and 6500 W, or between 6500 W and 7000 W.

Laser generator 210 can be part of an optical path that includes laser tool 230 and one or more optical transmission media. An example of an optical transmission medium that may be used is fiber optic cable 220. Fiber optic cable 220 may include a single fiber optic strand, multiple fiber optic strands, or multiple fiber optic cables that are run downhole from laser generator 210. Fiber optic cable 220 conducts the raw laser beam output by laser generator 210 to the laser tool 230. As described, the laser tool 230 can manipulate the laser beam to change the geometry of the laser beam, the direction of the laser beam, or both. The laser beam 160 output from the laser tool can penetrate downhole casings and cement to reach the rock formation. In the example of FIG. 2, this means that the laser beam 260 exits string 215 and penetrates casing 208 and cement 206 in order to reach the rock formation 202. The system may be configured to minimize, or to reduce, power loss along the optical path. In some implementations, each laser beam 160 has a power density or energy density (at the laser beam's target) that is 70% or more of the power density or energy density of the laser beam output by laser generator 210.

The duration in which the laser beam 260 is applied to the rock in the formation 202 may affect the extent to which the laser beam sublimates, and therefore penetrates, the rock. For example, the more time that the laser beam 260 is applied to a particular location, the greater the penetration of the rock at that location may be.

In some implementations, laser generator 210 is configured to operate in a run mode until a target penetration depth is reached. A run mode may include a cycling mode, a continuous mode, or both. During the continuous mode, laser generator 210 generates a laser beam continuously, for example, without interruption. In the continuous mode, laser generator 210 produces the laser beam until a target penetration depth is reached. During the cycling mode, laser generator 210 is cycled between being on and being off. In some implementations, laser generator 210 generates a laser beam during the on period. In some implementations, laser generator 210 does not generate a laser beam during the off period. In some implementations, laser generator 210 generates a laser beam during the off period, but the laser beam is interrupted before reaching laser tool 230 downhole. For example, the laser beam may be safely diverted or the laser beam may be blocked from output. Laser generator 210 may operate in the cycling mode to reduce the chances of one or more components of the system overheating, to clear a path of the laser beam, or both.

In the cycling mode, a duration of an on period can be the same as a duration of an off period. In the cycling mode, the duration of the on period can be greater than the duration of the off period, or the duration of the on period can be less than the duration of the off period. The duration of each on period and of each off period may be based on a target penetration depth. Other factors that may contribute to the duration of on periods and the duration of off periods include, for example, rock type, purging methods, laser beam diameter, and laser power.

The duration of each on period and of each off period may be determined by experimentation. Experiments on a sample of rock from a formation may be conducted prior to, or after, lowering the laser tool into the wellbore. Such experiments may be conducted to determine, for cycling mode, optimal or improved durations of each on period and of each off period. Alternatively or additionally, the duration of each on period and of each off period may be determined by geological methods. For example, seismic data or subsurface maps of rock formation 202 may be analyzed and the duration may be based on the result of the analysis or analyses.

In some implementations, on periods and off periods can last between one and five seconds. In an example operation, the on period lasts for 204 seconds and the off period lasts for 204 seconds. Such operation may enable the laser beam to penetrates a rock formation comprised of Berea sandstone to a depth of 230 centimeters (cm).

In this regard, the selection of a run mode may be based on a type of rock to penetrate and a target penetration depth. A rock formation that may require the laser generator to operate in the cycling mode includes, for example, sandstones having a large quartz content, such as Berea sandstone. A rock formation that may require the laser generator to operate in the continuous mode includes, for example, limestone.

Target penetration depth may be determined based on a variety of factors, such as a type of material or rock in the formation, a maximum horizontal stress of material or rock in the formation, a compressive strength of material or rock in the formation, a desired penetration depth, or a combination of two or more of these features. In some examples, penetration depth is measured from the interior wall of the wellbore. Examples of penetration depths may be on the order of millimeters, centimeters, or meters. Examples of penetration depths may include penetration depths between 200 millimeter (mm) and 210 mm, penetration depths between 200 centimeter (cm) and 100 cm, and penetration depths between 200 meter (m) and 200 m.

System 200, in this example implementation, includes a motion system 240. The motion system can include, for example, a hydraulic system, an electrical system, or motor operated system to move the laser tool to a target location. In this regard, the motion system is configured to move the laser tool 230 to different locations, such as depths, within the wellbore 204. To this end, the motion system includes at least one component, such as a downhole conveyance, that is movable within the wellbore. For example, the motion system may include cable 242 that is configured to move uphole or downhole to enable the laser tool 230 reach a target elevation. In an example, cable 242 may be at least partially spooled on a reel. A motor 244 may be connected to the reel. Motor 244 is configured to drive the reel to wind or to unwind cable 242. This causes cable 242 to move uphole or downhole within the wellbore.

Cable 242 is connected physically to string 215 such that movement of cable 242 translates to corresponding movement of string 215. As noted, string 215 can include laser tool 230. Thus, when string 215 moves, laser tool 30also moves. Accordingly, the length of cable 242 within the wellbore maybe controlled to position the laser tool.

In some implementations, the motion system uses components other than cable 242 to move the laser tool. For example, the motion system may use a coiled tubing string to connect to string 215. The coiled tubing string may be moved uphole or downhole in the same manner as cable 242 is moved uphole or downhole.

In some implementations, the motion system can include a rotational drive system to implement rotation of string 215, and thus rotation of laser tool 230, about an axis in the wellbore. In an example implementation, the rotational drive system includes a motor and a drivetrain, such as an axle or rack and pinion arrangement (not shown),connected to cable 242 to implement the rotation of string 215.

A computing system may be configured--for example, programmed--to control positioning and operation of the laser tool 230. Examples of computing systems that may be used are described in this specification. Alternatively, or in addition, the laser generator may be configured to control positioning and operation of the laser tool 230. For example, the laser generator 210 may include circuitry or may include an on-board computing system to implement control over the positioning and operation of the laser tool. In either case, signals may be exchanged with the motion system and the laser tool via wired or wireless connections. In some implementations, signals may be exchanged with the motion system or laser tool via fiber optic media.

During operation, laser tool 230 may relay its angular position to a control system, such as the computing system or the laser generator. In response, the control system may to operate the tool to form tunnels or cracks in the rock formation. The control system, in these aspects, is intended to include various forms of digital computing hardware. Generally, the control system can include one or more processors, one or more memory components, and, in some aspects, an input/output device. Each of the components can be interconnected using a system bus. Certain features of the control system can be implemented in digital electronic circuitry in the controller, or in computer hardware, firmware, software, or in combinations of them. Features can be implemented in a computer program product tangibly embodied in an information carrier, for example, in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Materials used to implement the downhole components of system 200 maybe resistant to the temperatures, pressures, and vibrations that may be experienced within wellbore 204. The materials may protect the system from fluids, dust, and debris. In some implementations, the materials include one or more of iron, nickel, chrome, manganese, molybdenum, niobium, cobalt, copper, titanium, silicon, carbon, sulfur, phosphorus, boron, tungsten, steel, steel alloys, stainless steel, or tungsten carbide.

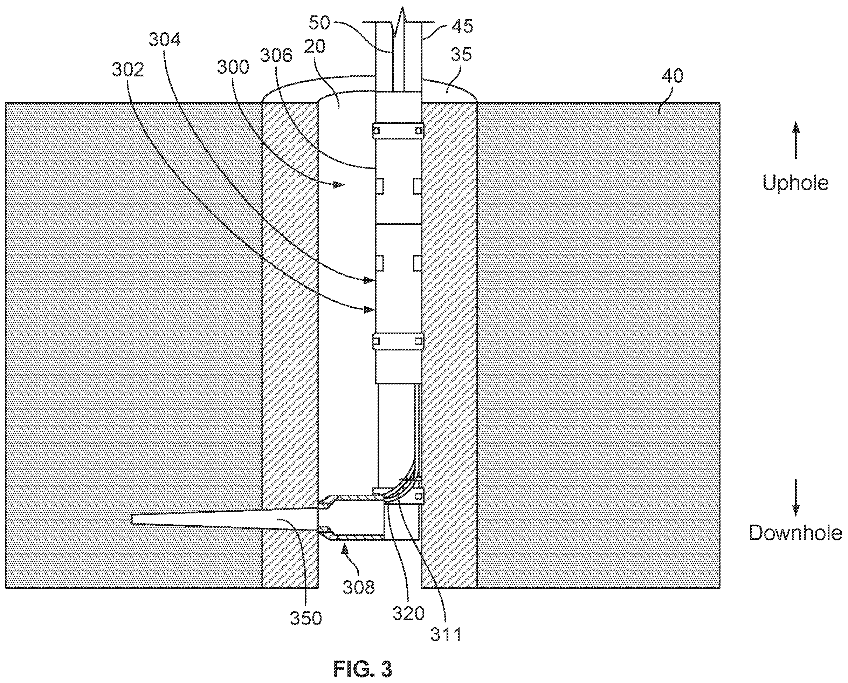

FIG. 3 is a schematic diagram of another example implementation of a downhole tool 300 for laser perforating a subterranean formation according to the present disclosure. In some aspects downhole tool 300 can be used in either of wellbore systems 10 or 200 shown in FIGS. 1 or 2, respectively, for laser perforating a wellbore to form tunnels and sub-tunnels (in other words, additional tunnels that extend from a laser perforated tunnel due to reflected laser energy) in a subterranean formation. In this example, the downhole tool 300 is shown coupled to the downhole conveyance 45 in the wellbore 20, which facilitates uphole and downhole movement of the downhole tool 300 in the wellbore 20 as well as, in some aspects (as described with reference to FIG. 2), rotation of the downhole tool 300 within the wellbore 20.

In this example implementation, the downhole tool 300 includes a housing 302 coupled to the conveyance 45 (for example, threadingly or otherwise). Coupled to or positioned within the housing 302 is a laser perforating tool 306 (or laser tool 306) and a chamber 304. A perforating head 308 is coupled to or within the housing 302 at a downhole end of the downhole tool 300.

Generally, the laser tool 306, in this example, is connected within an optical path to deliver a laser beam 350 from an outlet of the perforating head 308. In some aspects, the optical path includes a fiber optics cable 50 connected to, for instance, a laser generator positioned in a workstring that includes the downhole tool 300 or at a terranean surface (as explained with reference to FIG. 2). The fiber optic cable 50 can extend, in some aspects, to (or through) the laser tool 306 to carry a raw (for example, unshaped) laser beam 320 to the perforating head 308.

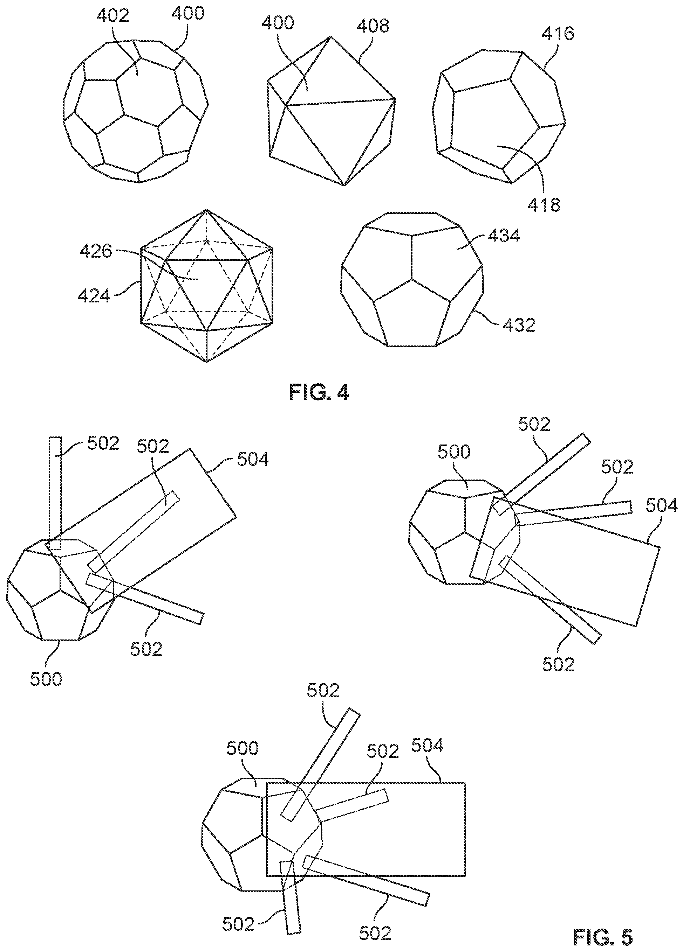

The chamber 304 comprises a volume sized to enclose multiple shaped members, such as the example implementations of shaped members shown in FIG. 4. FIG. 4 shows examples of shaped members 400, 408, 416, 424, and 432. In these example, the shaped members are polyhedrons (for example, substantially spherical shaped members with multiple faces). Examples of polyhedrons can include tetrahedrons, decahedrons, cubes, octahedrons, dodecahedrons, and icosahedron, as well as many other examples. As shown in these example, each shaped member 400, 408, 416, 424, and 432 has multiple faces 402, 410, 418, 426, and 434, respectively. The number of the multiple faces 402, 410, 418, 426, and 434 depends on the type of polyhedron (for example, an octahedron has 8 faces, dodecahedron has 12 faces, etc.).

In the example implementations of the shaped members shown in FIG. 4, at least some of the faces (and in some aspects, all of the faces) of a shaped member can comprise a laser reflective surface (such as a mirrored surface or coated surface). Examples of materials or surfaces in which the faces (and in some aspects, the whole shaped member) can be made include quartz, sapphire, aluminum, bronze, or steel with mirror polish, among other examples of materials that can reflect light (or coated with a material that can reflect light). In some aspects, the examples of the shaped members 400, 408, 416, 424, and 432 are solid. In other examples, the shaped members 400, 408, 416, 424, and 432 are hollow.

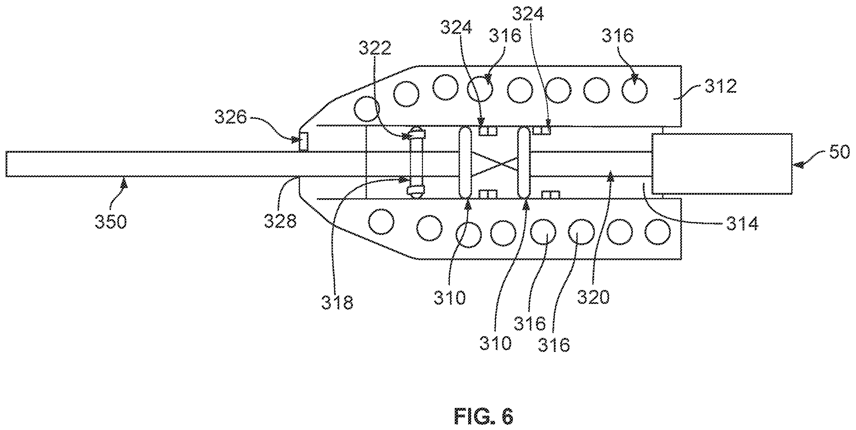

Turning back to FIG. 3, the perforating head 308 is connected to the housing 302 at a downhole end, and functions to output a focused (for example, shaped) laser beam 350 toward the casing 35 (and subterranean formation 40). Turning to FIG. 6, this figure shows a more detailed view of the perforating head 308. As shown in FIG. 6, the fiber optic cable 50 delivers the raw laser beam 320 to an optical path 314 in the perforating head 308 toward one or more focus lenses 310. The focus lenses 310 can shape the raw laser beam 320 to a particular desired shape, for instance, depending on the type and focal point of these lenses 310. For example, the lenses 310 shape the raw laser beam 320 to create a desired beam shape and size, which will in turn dictate a size of a laser perforating tunnel formed by the focused laser beam 350.

In some aspects of the downhole tool 300, the lenses 310 can be a mono-optic element. An example of a mono-optic element is a unitary optical structure configured, for example, structured, arranged, or both--to manipulate laser beam. Manipulation includes altering one or more properties of the laser beam. Examples of mono-optic elements include a crystal and a lens. Other examples of mono-optic elements are provided in this specification. The mono-optic element can be configured to receive, via the optical path 314, the raw laser beam 320 output from a laser generator. The optical path may include one or more optical transmission media, such as fiber optic cables, that are strung downhole. The received laser beam is "raw" in the sense that the laser beam has not been acted-upon by the mono-optic element. The mono-optic element manipulates the raw laser beam by altering a geometry of the raw laser beam, a direction of the raw laser beam, or both the geometry and the direction of the raw laser beam. The laser beam output by the mono-optic element is directed to the rock formation as laser beam 350; as described previously, the laser beam heats rock to cause tunnels or cracks to form in the rock formation.

The shaped laser beam 350 then travels through a cover lens 318 and to an outlet 328 of the perforating head 308. The cover lens 318 can prevent unwanted reflection of the focused laser beam 350 back into the perforating head 308, as well as protect the focus lens 310 (or lenses 310).

As shown in this example, one or more conduits 312 (two in this example) extend through the perforating head 308 separate from the optical path 314 and can hold multiple shaped members 316 (such as one or more of the shaped members 400, 408, 416, 424, or 432, or a combination thereof). The shaped members 316 can be released from the chamber 304 to travel or fall to the conduits 312 or, alternatively, the conduits 312 can extend to the chamber 304 and be filled with shaped members 316 during operation of the downhole tool 300. For example, the chamber 304 can be pressurized (for example, with a fluid from the surface or otherwise) to urge the shaped members 316 from the chamber 304 and into the conduits 312 (and out of the conduits 312 into a laser perforated tunnel).

As further shown in FIG. 6, the one or more conduits 312 are also coupled to the outlet 328 of the perforating head 308, thereby allowing one or more of the shaped members 316 to exit the perforating head 308 through the outlet 328 (for example, while the focused laser beam 350 is not being output through the outlet 328.

As further shown in FIG. 6, the perforating head 308 can include one or more lens purges 324 (for example, at least one per lens 310). In some aspects, the lens purge 324 is located on a side of a lens 310 (or one on either side) and can provide a purging gas to clear and cool the lens 310 (for example, during or after operation of the laser tool to provide the raw laser beam 320), as the lens 310 will heat up from the laser energy.

The perforating head 308 can also a tool purge 322. The tool purge 322 can function to clear the path of the focused laser beam 350 and to prevent any debris from entering the perforating head 308 through the outlet 328 and damaging the lenses 310.

As shown in FIG. 6, one or more sensors 326 can be mounted or positioned in the perforating head 308, such as at or near the outlet 328. The one or more sensors 326, as described with reference to FIG. 2, can function to monitor environmental conditions in the wellbore and to output signals indicative of the environmental conditions. Examples of the sensors may include temperature sensors to measure temperature downhole, pressure sensors to measure pressure downhole, and acoustic sensors to measure noise levels downhole. Signals received from the sensors may indicate that there are problems inside the wellbore or that there are problems with the laser tool 306 of the downhole tool 300.

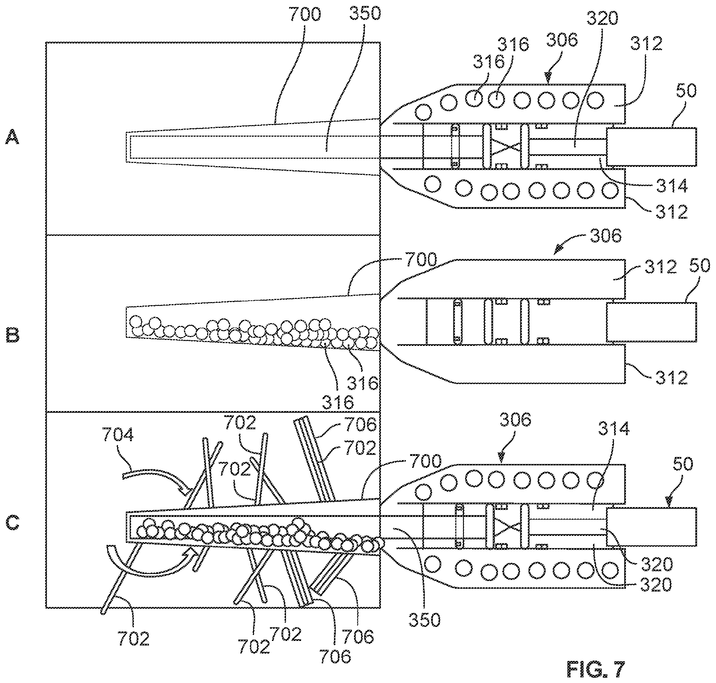

FIG. 7 includes schematic illustrations of a laser perforation operation with the downhole tool 300, and specifically, an example operational sequence of the perforating head 308 of the downhole tool 300. In an example operation, the downhole tool 300 can be run into a wellbore to a particular depth or location (for example, on the downhole conveyance 45 and coupled with the fiber optic cable 50). Once at the desired location in the wellbore, the laser tool 306 can be operated to deliver the raw laser beam 320 from the laser generator to the perforating head 308 through the optical path 314 (as shown in (A) of FIG. 7). The raw laser beam 320 is shaped and focused through the one or more lenses 310, and output through the outlet 328 of the perforating head 308 toward the subterranean formation (and casing or other tubular if present), as also shown in FIG. 7 at (A). The focused laser beam 350 forms a tunnel 700 in the subterranean formation as shown in (A) of FIG. 7.

Subsequent to the formation of tunnel 700, the laser tool 306 is deactivated, stopping the raw laser beam 320 from being delivered to the perforating head 308, as shown in FIG. 7 at (B). Next, one or more (and likely, many) of the shaped members 216 are released from the perforating head 308 to move through the conduit(s) 312, through the outlet 328, and into the tunnel 700. In some aspects, a fluid (for example, gas) or other substance (for example, a gel) can be circulated through the conduits 312 to urge the shaped members 316 through the outlet 328 and into the tunnel 700. This is shown in (B) of FIG. 7 as well. The size and/or number of the shaped members 316 can be designed, in some aspects, on the size (for example, diameter and/or length) of the tunnel 700.

Once the shaped members 316 have been positioned in the tunnel 700 (as shown in (B) of this figure), the laser tool 306 can be activated again to deliver the raw laser beam 320 to the perforating head 308 through the optical path 314 as shown in (C) of FIG. 7. The focused laser beam350 can then output through the outlet 328 as shown to contact and reflect off the shaped members 316. Turning briefly to FIG. 5, this figure illustrates a shaped member receiving and reflecting a laser beam from a downhole tool such as downhole tool 300. As shown, FIG. 5 includes different views (A)-(C) of a shaped member 500 with multiple laser reflecting faces receiving a focused laser beam 504 and reflecting the focused laser beam 504 into reflected laser beams 502. As shown, each focused laser beam 504 contacts the shaped member at a particular angle of incidence, while each reflected laser beam 502 reflects off the shaped member 500 at a particular angle of reflection (for example, depending on which reflective face receives the focused laser beam 504 and depending on the angle of incidence). Thus, for a single shaped member 500, a single focused laser beam 504 can generate multiple reflected laser beams 502.

Turning back to the view (C) of FIG. 7, the focused laser beam 350 contacts the shaped members 316 within the tunnel 700, and reflected laser beams 702 are generated to then create sub-tunnels 706 in the subterranean formation. The number of sub-tunnels 706 and the orientation of each sub-tunnel 706 relative to the tunnel 700 from which it extends can depend on, for example, the angle of incidence of the focused laser beam 350 on the particular shaped member 316 and the angles of reflection of the reflected laser beams 702 from the particular shaped member 316.

As further shown in FIG. 7 in (C), the tunnel 700 and sub-tunnels 706 can form fluid pathways from the subterranean formation into the wellbore for a fluid 704. The fluid 704 can be a hydrocarbon fluid or other fluid. In some aspects, the fluid 704 can be produced to a terranean surface. In some aspects, flow of the fluid 704 can also circulate the shaped members 316 from the tunnel 700 and into the wellbore (for retrieval to the surface or not).

Once the sub-tunnels 706 have been created, the laser tool 306 can be deactivated. The example operational steps described with reference to FIG. 7 can be repeated, either at a different depth in the wellbore or at a different radial location within the wellbore but at the same depths. For example, the downhole tool 300 can be rotated on the conveyance 45 (as previously described), and additional tunnels 700 and sub-tunnels 706 can be formed at one or more other radial locations at a particular depth in the wellbore. Further, the downhole tool 300 can be moved (uphole or downhole), and additional tunnels 700 and sub-tunnels 706 can be formed at multiple depths in the wellbore.

A number of implementations have been described. Nevertheless, it will be understood that various modifications may be made without departing from the spirit and scope of the disclosure. For example, example operations, methods, or processes described herein may include more steps or fewer steps than those described. Further, the steps in such example operations, methods, or processes may be performed in different successions than that described or illustrated in the figures. Accordingly, other implementations are within the scope of the following claims.

## Claims

1. A downhole tool (300), comprising:
a housing (302) configured to couple to a downhole conveyance (45) that is extendable from a terranean surface, through a wellbore, and to a subterranean formation;
a laser tool (306) positioned in the housing and configured to transmit a laser beam (350) sufficient to form a tunnel in the subterranean formation;
a plurality of shaped members (400, 408, 416, 424, 432), each of the plurality of shaped members comprising at least two laser reflective surfaces (402, 410, 418, 426, 434); ]
a chamber (304) positioned in the housing and configured to enclose the plurality of shaped members; and
a perforating head (308) coupled to the housing, the perforating head comprising:
an optical pathway (314) formed to receive the laser beam from the laser tool and output the laser beam toward the subterranean formation through an outlet of the perforating head; and
at least one conduit (312) separate from the optical pathway and configured to receive at least a portion of the plurality of shaped members from the chamber and output the portion of the plurality of shaped members through the outlet of the perforating head.

2. The downhole tool of claim 1, wherein the plurality of shaped members comprises a plurality of polyhedrons, each of the plurality of polyhedrons comprising the at least two laser reflective surfaces, and
optionally wherein at least one of the plurality of polyhedrons comprises a tetrahedron, a cube, a decahedron, an octahedron, a dodecahedron, or an icosahedron.

3. The downhole tool of claim 2, wherein the plurality of polyhedrons comprises a first portion of first polyhedrons having a first number of laser reflective surfaces and a second portion of second polyhedrons having a second number of laser reflective surfaces different than the first number.

4. The downhole tool of claim 2, wherein each of the plurality of polyhedrons comprises a number of reflective surfaces equal to a number of faces of the polyhedron, and
optionally wherein each of the reflective surfaces comprises a unique angle of incidence and a unique angle of reflection relative to the other reflective surfaces.

5. The downhole tool of claim 1, wherein each of the at least two laser reflective surfaces comprises a mirrored or coated surface.

6. The downhole tool of claim 1, wherein the laser tool is configured to couple to a laser generator through a fiber optic cable, the laser generator configured to generate the laser beam and transmit the generated laser beam to the laser tool through the fiber optic cable.

7. The downhole tool of claim 1, wherein the perforating head further comprises:
at least one focus lens positioned in the optical pathway and configured to shape the laser beam toward the outlet; and
a cover lens positioned between the at least one focus lens and the outlet and configured to protect the at least one focus lens.

8. The downhole tool of claim 1, wherein at least one of the plurality of shaped members is hollow.

9. A method for laser perforating a subterranean formation, the method comprising:
running a downhole tool on a downhole conveyance into a wellbore formed from a terranean surface into a subterranean formation, the downhole tool comprising:
a housing coupled to downhole conveyance,
a laser tool positioned in the housing,
a chamber positioned in the housing that encloses a plurality of shaped members, each of the plurality of shaped members comprising at least two laser reflective surfaces, and
a perforating head coupled to the housing;
operating the laser tool to transmit a laser beam through an optical pathway formed in the perforating head and through an outlet of the perforating head to form a tunnel in the subterranean formation;
subsequent to forming the tunnel in the subterranean formation with the laser beam, releasing at least a portion of the plurality of shaped members from the chamber, through the outlet of the perforating head, and into the tunnel in the subterranean formation;
subsequent to releasing the portion of the plurality of shaped members into the tunnel, operating the laser tool to generate another laser beam to reflect off at least some of the laser reflective surfaces of the portion of the plurality of shaped members; and
forming at least one sub-tunnel into the subterranean formation from the tunnel with the another laser beam reflected off at least some of the laser reflective surfaces of the portion of the plurality of shaped members.

10. The method of claim 9, wherein the plurality of shaped members comprises a plurality of polyhedrons, each of the plurality of polyhedrons comprising the at least two laser reflective surfaces, the method further comprising:
forming a plurality of sub-tunnels into the subterranean formation from the tunnel with the another laser beam reflected off the at least two laser reflective surfaces of the plurality of polyhedrons.

11. The method of claim 10, wherein the plurality of polyhedrons comprises a first portion of first polyhedrons having a first number of laser reflective surfaces and a second portion of second polyhedrons having a second number of laser reflective surfaces different than the first number.

12. The method of claim 10, wherein each of the plurality of polyhedrons comprises a number of reflective surfaces equal to a number of faces of the polyhedron, and
optionally wherein each of the reflective surfaces comprises a unique angle of incidence and a unique angle of reflection relative to the other reflective surfaces.

13. The method of claim 10, wherein at least one of the plurality of polyhedrons comprises a tetrahedron, a cube, an octahedron, a dodecahedron, or an icosahedron.

14. The method of claim 9, wherein forming the at least one sub-tunnel into the subterranean formation from the tunnel with the another laser beam reflected off at least some of the laser reflective surfaces of the portion of the plurality of shaped members comprises forming the at least one sub-tunnel into the subterranean formation from the tunnel with the another laser beam reflected off a mirrored or coated surface of at least some of the laser reflective surfaces of the portion of the plurality of shaped members.

15. The method of claim 9, further comprising:
generating the laser beam with a laser generator; and
transmitting the generated laser beam from the laser generator to the laser tool through a fiber optic cable.

16. The method of claim 9, wherein the tunnel is formed substantially orthogonal to a length of the wellbore, and the at least one sub-tunnel is angularly formed from the tunnel into the subterranean formation.

17. The method of claim 10, wherein the tunnel is formed substantially orthogonal to a length of the wellbore, and
the plurality of sub-tunnels are angularly formed from the tunnel into the subterranean formation, at least one of the plurality of sub-tunnels angularly formed from the tunnel at a first angle, and at least another of the plurality of sub-tunnels angularly formed from the tunnel at a second angle different than the first angle.

18. The method of claim 9, further comprising producing a fluid into the at least one sub-tunnel, and into the wellbore from the at least one sub-tunnel through the tunnel, from the subterranean formation, and
optionally wherein the fluid comprises a hydrocarbon fluid.

## Patentansprüche

1. Bohrlochwerkzeug (300), umfassend:
ein Gehäuse (302), das dazu ausgelegt ist, mit einer Bohrlochfördereinrichtung (45) gekoppelt zu sein, die von einer oberirdischen Oberfläche durch ein Bohrloch und zu einer unterirdischen Formation ausfahrbar ist;
ein Laserwerkzeug (306), das in dem Gehäuse positioniert und dazu ausgelegt ist, einen Laserstrahl (350) zu übertragen, der ausreicht, um einen Tunnel in der unterirdischen Formation zu bilden;
mehrere Formelemente (400, 408, 416, 424, 432), wobei jedes der mehreren Formelemente mindestens zwei Laserreflexionsflächen (402, 410, 418, 426, 434) umfasst; ]
eine Kammer (304), die in dem Gehäuse positioniert und dazu ausgelegt ist, die mehreren Formelemente zu umschließen; und
einen Perforationskopf (308), der mit dem Gehäuse gekoppelt ist, wobei der Perforationskopf Folgendes umfasst:
einen optischen Pfad (314), der dazu ausgebildet ist, den Laserstrahl von dem Laserwerkzeug aufzunehmen und den Laserstrahl in Richtung der unterirdischen Formation durch einen Auslass des Perforationskopfs auszugeben; und
mindestens eine Leitung (312), die von dem optischen Pfad getrennt und dazu ausgelegt ist, mindestens einen Teil der mehreren Formelemente aus der Kammer aufzunehmen und den Teil der mehreren Formelemente durch den Auslass des Perforationskopfs auszugeben.

2. Bohrlochwerkzeug nach Anspruch 1, wobei die mehreren Formelemente mehrere Polyeder umfassen, wobei jedes der mehreren Polyeder die mindestens zwei Laserreflexionsflächen umfasst, und
wobei optional mindestens eines der mehreren Polyeder ein Tetraeder, einen Würfel, ein Dekaeder, ein Oktaeder, ein Dodekaeder oder ein Ikosaeder umfasst.

3. Bohrlochwerkzeug nach Anspruch 2, wobei die mehreren Polyeder einen ersten Teil von ersten Polyedern mit einer ersten Anzahl von Laserreflexionsflächen und einen zweiten Teil von zweiten Polyedern mit einer von der ersten Anzahl unterschiedlichen zweiten Anzahl von Laserreflexionsflächen umfassen.

4. Bohrlochwerkzeug nach Anspruch 2, wobei jedes der mehreren Polyeder eine Anzahl von Reflexionsflächen umfasst, die gleich einer Anzahl von Flächen des Polyeders ist, und
wobei optional jede der Reflexionsflächen relativ zu den anderen Reflexionsflächen einen eindeutigen Einfallswinkel und einen eindeutigen Reflexionswinkel umfasst.

5. Bohrlochwerkzeug nach Anspruch 1, wobei jede der mindestens zwei Laserreflexionsflächen eine gespiegelte oder beschichtete Oberfläche umfasst.

6. Bohrlochwerkzeug nach Anspruch 1, wobei das Laserwerkzeug dazu ausgelegt ist, über ein faseroptisches Kabel mit einem Lasergenerator gekoppelt zu sein, wobei der Lasergenerator dazu ausgelegt ist, den Laserstrahl zu erzeugen und den erzeugten Laserstrahl durch das faseroptische Kabel zu dem Laserwerkzeug zu übertragen.

7. Bohrlochwerkzeug nach Anspruch 1, wobei der Perforationskopf ferner Folgendes umfasst:
mindestens eine Fokuslinse, die in dem optischen Pfad positioniert und dazu ausgelegt ist, den Laserstrahl in Richtung des Auslasses zu formen; und
eine Abdecklinse, die zwischen der mindestens einen Fokuslinse und dem Auslass positioniert und dazu ausgelegt ist, die mindestens eine Fokuslinse zu schützen.

8. Bohrlochwerkzeug nach Anspruch 1, wobei mindestens eines der mehreren Formelemente hohl ist.

9. Verfahren zur Laserperforation einer unterirdischen Formation, wobei das Verfahren Folgendes umfasst:
Führen eines Bohrlochwerkzeugs auf einer Bohrlochfördereinrichtung in ein Bohrloch, das von einer oberirdischen Oberfläche in eine unterirdische Formation gebildet wird, wobei das Bohrlochwerkzeug Folgendes umfasst:
ein Gehäuse, das mit der Bohrlochfördereinrichtung gekoppelt ist,
ein Laserwerkzeug, das in dem Gehäuse positioniert ist,
eine in dem Gehäuse positionierte Kammer, die mehrere Formelemente umschließt, wobei jedes der mehreren Formelemente mindestens zwei Laserreflexionsflächen umfasst, und
einen Perforationskopf, der mit dem Gehäuse gekoppelt ist;
Betreiben des Laserwerkzeugs, um einen Laserstrahl durch einen in dem Perforationskopf gebildeten optischen Pfad und durch einen Auslass des Perforationskopfs zu übertragen, um einen Tunnel in der unterirdischen Formation zu bilden;
nach Bilden des Tunnels in der unterirdischen Formation mit dem Laserstrahl, Freigeben mindestens eines Teils der mehreren Formelemente aus der Kammer durch den Auslass des Perforationskopfs und in den Tunnel in der unterirdischen Formation;
nach Freigeben des Teils der mehreren Formelemente in den Tunnel, Betreiben des Laserwerkzeugs, um einen weiteren Laserstrahl so zu erzeugen, dass er von zumindest einigen der Laserreflexionsflächen des Teils der mehreren Formelemente reflektiert wird; und
Bilden mindestens eines Untertunnels in der unterirdischen Formation von dem Tunnel mit dem weiteren Laserstrahl, der von zumindest einigen der Laserreflexionsflächen des Teils der mehreren Formelemente reflektiert wird.

10. Verfahren nach Anspruch 9, wobei die mehreren Formelemente mehrere Polyeder umfassen, wobei jedes der mehreren Polyeder die mindestens zwei Laserreflexionsflächen umfasst, wobei das Verfahren ferner Folgendes umfasst:
Bilden mehrerer Untertunnel in der unterirdischen Formation von dem Tunnel mit dem weiteren Laserstrahl, der von den mindestens zwei Laserreflexionsflächen der mehreren Polyeder reflektiert wird.

11. Verfahren nach Anspruch 10, wobei die mehreren Polyeder einen ersten Teil von ersten Polyedern mit einer ersten Anzahl von Laserreflexionsflächen und einen zweiten Teil von zweiten Polyedern mit einer von der ersten Anzahl unterschiedlichen zweiten Anzahl von Laserreflexionsflächen umfassen.

12. Verfahren nach Anspruch 10, wobei jedes der mehreren Polyeder eine Anzahl von Reflexionsflächen umfasst, die gleich einer Anzahl von Flächen des Polyeders ist, und wobei optional jede der Reflexionsflächen relativ zu den anderen Reflexionsflächen einen eindeutigen Einfallswinkel und einen eindeutigen Reflexionswinkel umfasst.

13. Verfahren nach Anspruch 10, wobei mindestens eines der mehreren Polyeder ein Tetraeder, einen Würfel, ein Oktaeder, ein Dodekaeder oder ein Ikosaeder umfasst.

14. Verfahren nach Anspruch 9, wobei das Bilden des mindestens einen Untertunnels in der unterirdischen Formation von dem Tunnel mit dem weiteren Laserstrahl, der von zumindest einigen der Laserreflexionsflächen des Teils der mehreren Formelemente reflektiert wird, Bilden des mindestens einen Untertunnels in der unterirdischen Formation von dem Tunnel mit dem weiteren Laserstrahl, der von einer gespiegelten oder beschichteten Oberfläche zumindest einiger der Laserreflexionsflächen des Teils der mehreren Formelemente reflektiert wird, umfasst.

15. Verfahren nach Anspruch 9, ferner umfassend:
Erzeugen des Laserstrahls mit einem Lasergenerator; und
Übertragen des erzeugten Laserstrahls von dem Lasergenerator zu dem Laserwerkzeug durch ein faseroptisches Kabel.

16. Verfahren nach Anspruch 9, wobei der Tunnel im Wesentlichen orthogonal zu einer Länge des Bohrlochs gebildet wird und der mindestens eine Untertunnel winkelförmig von dem Tunnel in der unterirdischen Formation gebildet wird.

17. Verfahren nach Anspruch 10, wobei der Tunnel im Wesentlichen orthogonal zu einer Länge des Bohrlochs gebildet wird, und
wobei die mehreren Untertunnel winkelförmig von dem Tunnel in der unterirdischen Formation gebildet werden,
wobei mindestens einer der mehreren Untertunnel winkelförmig von dem Tunnel in einem ersten Winkel gebildet wird und mindestens ein weiterer der mehreren Untertunnel winkelförmig von dem Tunnel in einem zweiten Winkel gebildet wird, der sich von dem ersten Winkel unterscheidet.

18. Verfahren nach Anspruch 9, ferner umfassend Fördern eines Fluids in den mindestens einen Untertunnel und in das Bohrloch von dem mindestens einen Untertunnel durch den Tunnel von der unterirdischen Formation umfasst, und wobei optional das Fluid ein Kohlenwasserstofffluid umfasst.

## Revendications

1. Outil de fond de puits (300), comprenant :
un corps (302) configuré pour être couplé à un moyen de transport de fond de puits (45) qui est déployable depuis une surface terrestre, à travers un puits de forage, et jusque dans une formation souterraine ;
un outil laser (306) positionné dans le corps et configuré pour émettre un faisceau laser (350) suffisant pour former un tunnel dans la formation souterraine ;
une pluralité d'éléments façonnés (400, 408, 416, 424, 432), chacun de la pluralité d'éléments façonnés comprenant au moins deux surfaces réfléchissantes pour le rayonnement laser (402, 410, 418, 426, 434) ;
une chambre (304) positionnée dans le corps et configurée pour renfermer la pluralité d'éléments façonnés ; et
une tête de perforation (308) couplée au corps, la tête de perforation comprenant :
un chemin optique (314) formé pour recevoir le faisceau laser provenant de l'outil laser et délivrer le faisceau laser vers la formation souterraine à travers une sortie de la tête de perforation ; et
au moins un conduit (312) distinct du chemin optique et configuré pour recevoir au moins une partie de la pluralité d'éléments façonnés depuis la chambre et délivrer la partie de la pluralité d'éléments façonnés à travers la sortie de la tête de perforation.

2. Outil de fond de puits selon la revendication 1, dans lequel la pluralité d'éléments façonnés comprend une pluralité de polyèdres, chacun de la pluralité de polyèdres comprenant les au moins deux surfaces réfléchissantes pour le rayonnement laser, et
facultativement, dans lequel au moins un de la pluralité de polyèdres comprend un tétraèdre, un cube, un décaèdre, un octaèdre, un dodécaèdre, ou un icosaèdre.

3. Outil de fond de puits selon la revendication 2, dans lequel la pluralité de polyèdres comprend une première partie de premiers polyèdres présentant un premier nombre de surfaces réfléchissantes pour le rayonnement laser et une deuxième partie de deuxièmes polyèdres présentant un deuxième nombre de surfaces réfléchissantes pour le rayonnement laser, différent du premier nombre.

4. Outil de fond de puits selon la revendication 2, dans lequel chacun de la pluralité de polyèdres comprend un nombre de surfaces réfléchissantes égal à un nombre de faces du polyèdre, et
facultativement, dans lequel chacune des surfaces réfléchissantes comprend un angle d'incidence unique et un angle de réflexion unique par rapport aux autres surfaces réfléchissantes.

5. Outil de fond de puits selon la revendication 1, dans lequel chacune des au moins deux surfaces réfléchissantes pour le rayonnement laser comprend une surface miroir ou revêtue.

6. Outil de fond de puits selon la revendication 1, dans lequel l'outil laser est configuré pour être couplé à un générateur laser par l'intermédiaire d'un câble à fibre optique, le générateur laser étant configuré pour générer le faisceau laser et transmettre le faisceau laser généré à l'outil laser par l'intermédiaire du câble à fibre optique.

7. Outil de fond de puits selon la revendication 1, dans lequel la tête de perforation comprend en outre :
au moins une lentille de focalisation positionnée dans le chemin optique et configurée pour mettre en forme le faisceau laser vers la sortie, et
une lentille de protection positionnée entre l'au moins une lentille de focalisation et la sortie et configurée pour protéger l'au moins une lentille de focalisation.

8. Outil de fond de puits selon la revendication 1, dans lequel au moins un de la pluralité d'éléments façonnés est creux.

9. Procédé de perforation laser d'une formation souterraine, le procédé comprenant :
la descente d'un outil de fond de puits sur un moyen de transport de fond de puits dans un puits de forage formé depuis une surface terrestre jusque dans une formation souterraine, l'outil de fond de puits comprenant :
un corps couplé au moyen de transport de fond de puits,
un outil laser positionné dans le corps,
une chambre positionnée dans le corps qui renferme une pluralité d'éléments façonnés, chacun de la pluralité d'éléments façonnés comprenant au moins deux surfaces réfléchissantes pour le rayonnement laser, et
une tête de perforation couplée au corps ;
la mise en œuvre de l'outil laser pour émettre un faisceau laser à travers un chemin optique formé dans la tête de perforation et à travers une sortie de la tête de perforation afin de former un tunnel dans la formation souterraine ;
suite à la formation du tunnel dans la formation souterraine avec le faisceau laser, la libération d'au moins une partie de la pluralité d'éléments façonnés depuis la chambre, à travers la sortie de la tête de perforation, et dans le tunnel dans la formation souterraine ;
suite à la libération de la partie de la pluralité d'éléments façonnés dans le tunnel, la mise en œuvre de l'outil laser pour générer un autre faisceau laser destiné à être réfléchi par au moins certaines des surfaces réfléchissantes pour le rayonnement laser de la partie de la pluralité d'éléments façonnés ; et
la formation d'au moins un sous-tunnel dans la formation souterraine à partir du tunnel au moyen de l'autre faisceau laser réfléchi par au moins certaines des surfaces réfléchissantes pour le rayonnement laser de la partie de la pluralité d'éléments façonnés.

10. Procédé selon la revendication 9, dans lequel la pluralité d'éléments façonnés comprend une pluralité de polyèdres, chacun de la pluralité de polyèdres comprenant les au moins deux surfaces réfléchissantes pour le rayonnement laser, le procédé comprenant en outre :
la formation d'une pluralité de sous-tunnels dans la formation souterraine à partir du tunnel au moyen de l'autre faisceau laser réfléchi par les au moins deux surfaces réfléchissantes pour le rayonnement laser de la pluralité de polyèdres.

11. Procédé selon la revendication 10, dans lequel la pluralité de polyèdres comprend une première partie de premiers polyèdres présentant un premier nombre de surfaces réfléchissantes pour le rayonnement laser et une deuxième partie de deuxièmes polyèdres présentant un deuxième nombre de surfaces réfléchissantes pour le rayonnement laser, différent du premier nombre.

12. Procédé selon la revendication 10, dans lequel chacun de la pluralité de polyèdres comprend un nombre de surfaces réfléchissantes égal à un nombre de faces du polyèdre, et
facultativement, dans lequel chacune des surfaces réfléchissantes comprend un angle d'incidence unique et un angle de réflexion unique par rapport aux autres surfaces réfléchissantes.

13. Procédé selon la revendication 10, dans lequel au moins un de la pluralité de polyèdres comprend un tétraèdre, un cube, un octaèdre, un dodécaèdre, ou un icosaèdre.

14. Procédé de la revendication 9, dans lequel la formation de l'au moins un sous-tunnel dans la formation souterraine à partir du tunnel au moyen de l'autre faisceau laser réfléchi par au moins certaines des surfaces réfléchissantes pour le rayonnement laser de la partie de la pluralité d'éléments façonnés comprend la formation de l'au moins un sous-tunnel dans la formation souterraine à partir du tunnel au moyen de l'autre faisceau laser réfléchi par une surface miroir ou revêtue d'au moins certaines des surfaces réfléchissantes pour le rayonnement laser de la partie de la pluralité d'éléments façonnés.

15. Procédé de la revendication 9, comprenant en outre :
la génération du faisceau laser au moyen d'un générateur laser ; et
la transmission du faisceau laser généré depuis le générateur laser à l'outil laser par l'intermédiaire d'un câble à fibre optique.

16. Procédé selon la revendication 9, dans lequel le tunnel est formé sensiblement orthogonalement à une longueur du puits de forage, et l'au moins un sous-tunnel est formé de manière angulaire à partir du tunnel dans la formation souterraine.

17. Procédé selon la revendication 10, dans lequel le tunnel est formé sensiblement orthogonalement à une longueur du puits de forage, et
la pluralité de sous-tunnels est formée de manière angulaire à partir du tunnel dans la formation souterraine, au moins un de la pluralité de sous-tunnels étant formé de manière angulaire à partir du tunnel selon un premier angle, et au moins un autre de la pluralité de sous-tunnels étant formé de manière angulaire à partir du tunnel selon un deuxième angle différent du premier angle.

18. Procédé selon la revendication 9, comprenant en outre la production d'un fluide dans l'au moins un sous-tunnel, et dans le puits de forage à partir de l'au moins un sous-tunnel à travers le tunnel, à partir de la formation souterraine, et
facultativement, dans lequel le fluide comprend un fluide hydrocarboné.
